# EUROPEAN PATENT SPECIFICATION

(11) **EP 1 846 204 B1**
(45) Date of publication and mention of the grant of the patent: **24.04.2019**
(21) Application number: 06707855.0
(22) Date of filing: 26.01.2006
(51) Int. Cl.: B01F 7/16, B28B 7/36, B01F 7/30, B01F 15/00, B28B 11/00, B28C 5/08, B29C 67/24

(54) **METHOD FOR PRODUCING ARTICLES WHICH ARE NOT FLAT USING AGGLOMERATES OF INORGANIC AGGREGATES AND HARDENING RESINS**
VERFAHREN ZUR HERSTELLUNG VON NICHTFLACHEN ARTIKELN MITHILFE VON AGGLOMERATEN VON ANORGANISCHEN AGGREGATEN UND HÄRTENDEN HARZEN
PROCÉDÉ DE FABRICATION D'ARTICLES QUI NE SONT PAS PLATS AU MOYEN D'AGGLOMERATS D'AGREGATS INORGANIQUE ET DES RESINES DURCISSANTES

(30) Priority: 08.02.2005 IT TV20050019
(43) Date of publication of application: 24.10.2007
(73) Proprietor: Toncelli, Dario, 36061 Bassano del Grappa (VI) (IT)
(72) Inventor: Toncelli, Dario, 36061 Bassano del Grappa (VI) (IT)
(74) Representative: Dragotti, Gianfranco
(86) International application number: PCT/EP2006/050470
(87) International publication number: WO 2006/084794

(56) References cited:
- GB-A- 671 185
- GB-A- 1 060 691
- US-A- 3 773 447
- US-A- 4 698 010
- US-A- 4 702 877

## Description

The present invention relates to the production of articles having a shape which is not flat, more specifically slightly curved, from a mix consisting of granulated inorganic materials and hardening resins as binders.

Articles obtained from a mix consisting of granulated natural stone and/or stone-like and/or ceramic materials and hardening resins are well known in the technical literature - see in particular the patents US-A-4,698,010 and 5,264,168. Variants of these articles also exist, these being characterized by the additional use of reinforcing elements, for example metal and/or glass fibre elements - see, among other publications, the patents US-A-5,670,007 and 6,205,727 as well as the patent application WO-A-03,035,994, US-A-3773447 discloses a method for producing an article, with a non-flat shape which has a radii of curvature of about 15 cm or more in , comprising the following steps:
- preparing a mix comprising granulated inorganic materials able to be hardened by means of cross-linking,
- preparing a flat forming support, protected by an anti-adhesive sheet
- spreading the mix over said forming support
- hardening the shaped panel so as to obtain the curved panel as desired.

These articles always have a flat shape, both in the case of sheets and panels, where the thickness is much smaller than the other two dimensions, and in the case of parallelepiped blocks, i.e. when all three dimensions of the articles are of the same order of magnitude. Thus, although widely found on the world markets, these articles are not universally used, as instead would be desirable because of their excellent mechanical properties and other characteristics.

The main object of the invention is to provide an industrial method which allows the production of articles, in particular sheets and panels, having a shape which is slightly curved (i.e. with a radius of curvature greater than about 15 cm).

This object and other objects are achieved by a method having the characteristic features of a first set of the following claims.

Another object of the invention is to provide, among the many articles which may be produced with this method, panels with a curved shape which are used to line the metallic inner surfaces of mixing machines inside which mixes comprising abrasive ingredients are processed.

This object, together with others, are achieved by articles having the characteristic features of a second set of the following claims.

The following description will be useful for illustrating more clearly characteristic features and advantages of the invention, said description being provided solely by way of a non-exclusive example with reference to the accompanying drawings in which:
- Fig. 1 is a schematic view of an article produced with the method according to the invention, the article being shown in a three-dimensional view from above;
- Fig. 2 shows the article according to Fig. 1 in the state it assumes during the hardening step which forms part of the method according to the invention;
- Fig. 3 shows - along a vertically sectioned plane - a mixing machine in which a plurality of articles according to Figs. 1 and 2 are used as a lining;
- Fig. 4 shows a cross-section, on a larger scale, along the line IV-IV of Fig. 3.

In the following description reference will be made to the production of curved panels for lining the inner surfaces of the walls of mixing machines used for processing mixes containing ingredients with abrasive properties. This description nevertheless is provided by way of an example and is not exclusive since the articles produced with the method according to the invention may, for example, also be used in the building sector (for lining internal or external walls or for covering roofs) as well as in durable consumer goods.

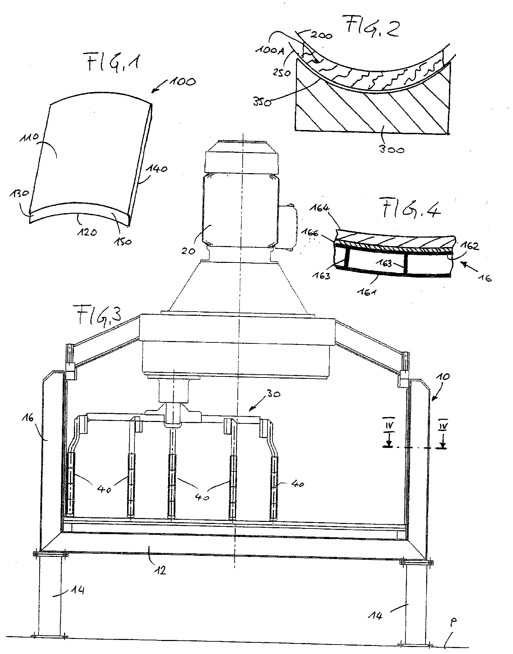

As shown in Fig. 1, the article to be produced, which is denoted overall by the reference number 100, comprises two faces 110, 120 consisting of concentric cylindrical surface portions with radii of curvature R1, R2 which are slightly different (in the region of 50 cm or more), two rectangular side faces 130, 140 and two end faces in the form of a circular rim segment, of which only the one indicated by the reference number 150 can be seen.

According to the invention, the method for producing the article 100 comprises the following steps:
I) preparing a mix comprising granulated inorganic materials (for example stone and/or stone-like and/or ceramic materials) and an epoxy resin, which can be hardened by means of crosslinking. This type of resin is preferable to polyester resins (commonly used to produce conventional flat articles) since they harden with a very small degree of shrinkage and the dangers of distortion of the article are avoided;
II) preparing a flat forming support, protected by an anti-adhesive sheet, for example as explained in the patent US-A-5,928,585. The term "anti-adhesive sheet", used here, comprises both a sheet made with a single non-adhesive material and a sheet made with the same type of materials used for manufacturing the forming support (for example rubber) and protected with a non-adhesive and/or separating film;
III) spreading the mix over said forming support;
IV) extending over the free surface of the mix a second sheet of anti-adhesive material, of the same type as that used to protect the forming support;
V) compacting the mix by means of vacuum vibrocompression so as to obtain a panel having the consistency of plasticine, namely soft but sufficiently compact such that it does not fold during the following step of this method;
VI) transferring the mix thus compacted (together with the two sheets of anti-adhesive material) onto a rigid support with a curved shape; Fig. 2 shows a panel 100A of shaped mix which is arranged between the two sheets 200 and 250 of anti-adhesive material and which (as regards that stated in the previous step V) has assumed the same concave shape as the upwardly directed surface 350 of the rigid support 300; the surface 350 has the same radius of curvature R1 as the face 110 of the finished article (as already mentioned hereinabove with reference to Fig. 1) and may be not only concave as shown in Fig. 2, but also convex or undulated, i.e. alternately concave and convex;
VII) keeping at room temperature the panel 100A of shaped mix on the support 300 until hardened;
VIII) in order to complete (if necessary) cross-linking of the epoxy resin, heating the hardened panel to about 40°C (i.e. to a temperature slightly higher than room temperature);
IX) removing the two sheets 200 and 250 of anti-adhesive material from the hardened panel and, if necessary;
X) trimming the edges of the hardened panel, for example using a diamondcoated disk, so as to obtain the finished article 100.

In the case where the use of the article thus produced requires a high impact strength, the step III) may envisage spreading, onto the flat forming support, two superimposed layers of mix with a reinforcing layer in between, for example a glass fibre or metal mesh or mat, for example a steel mesh.

As already mentioned, Figs. 3 and 4 show an example of use of articles made using the method described. The figures relate to a vertical-axis mixing machine for processing mixes containing one or more ingredients with abrasive properties, which comprises a cylindrical container 10 and a motor 20 for operating a mixing unit 30 comprising a plurality of vertical blades 40. Further details regarding this type of machine may be found in an Italian patent application filed on the same date by the same Applicant.

The container 10 comprises a bottom wall 12 having feet 14 for resting on the ground P and a side wall 16. In a manner known per se, the bottom wall 12 is divided into a fixed part and a movable part or shutter (not shown) in the form of a circle segment which, in the open position, uncovers an aperture (also not shown) for discharging the mix at the end of processing.

As shown in Fig. 4, the side wall 16 of the container 10 comprises an outer shell 161 and an inner shell 162 joined together by radial ribs 163. These parts are made of metal, for example steel. The inner shell 162 is lined internally with curved panels 164 which are manufactured using the method described above. The curved panels 164 are fixed to steel sheets 166 provided with stud bolts (not shown) which are butt-welded onto them and which allow them to be mechanically fixed to the shell 162 in an easy and rapidly removable manner. Alternatively, the curved panels 164 are glued, for example by means of silicone adhesive, directly to the inner shell 162.

It has been shown in tests that the use of the panels 164, in this case made of granulated quartz (light-coloured/transparent material with a hardness factor of about 7 Mohs) or, even better, alumina or corundum of the white type (light-coloured/transparent material with a very high hardness factor of about 9 Mohs) which have a very long working life (i.e. about 6-8 months of two working shifts), produces the following advantages:
- it prevents the release of metal particles detached, as a result of the abrasion exerted by the hard aggregates, from the inner shell 162 of the side wall 16 of the container 10;
- since the colour of the mix being processed is not contaminated, the frequency of the maintenance carried out on the said container 10 is reduced; and
- cleaning of the side wall 16 whenever the mix is changed is much easier since the hardness of the panels 164 limits the appearance of scratches to which the mix could adhere.

In short, owing to the use of the sheets 164 inside the container 10, the productive efficiency of the mixing machine is increased.

In addition to the hard stone materials considered above, other inorganic materials may be used in the method according to the present invention. For example, if the articles to be produced must be extremely hard and the colour is not of importance for their specific use, carborundum may be used. Vice versa, if the applicational requirements of the articles are less demanding, granulated ceramic materials may be used.

## Claims

1. Method for producing an article with a non-flat shape which has a radii of curvature of about 15 cm or more, comprising the following steps:
I) preparing a mix comprising granulated inorganic materials and at least one resin able to be hardened by means of cross-linking, with a very small degree of shrinkage;
II) preparing a flat forming support, protected by an anti-adhesive sheet (250);
III) spreading the mix over said forming support;
IV) extending a second anti-adhesive sheet (200) over the free surface of the mix;
V) compacting the mix by means of vacuum vibrocompression so that it assumes the configuration of a flat panel which is soft but sufficiently compact such that it does not fold during the following step of this method;
VI) transferring said panel, together with the two sheets of an anti-adhesive material, onto a rigid support (300) and causing the panel to assume the same shape as the free surface (350) of said rigid support (300), the said surface having the same curvature as the article (100) to be obtained;
VII) hardening the shaped panel (100A) so as to obtain the curved panel as desired;
VIII) removing the two sheets of anti-adhesive material from the article.

2. Method according to Claim 1, in which said granulated materials consist of stone and/or stone-like and/or ceramic materials.

3. Method according to Claim 2, in which said stone materials have a hardness equal to or greater than 7 Mohs and are chosen from among quartz, corundum, alumina and carborundum.

4. Method according to Claim 1, in which said at least one resin able to be hardened by means of cross-linking is an epoxy resin.

5. Method according to Claim 1, in which the free surface (350) of said rigid support (300) is concave.

6. Method according to Claim 1, in which the free surface (350) of said rigid support (300) is convex.

7. Method according to Claim 1, in which the free surface (350) of said rigid support (300) is undulated.

8. Method according to Claim 1, in which said step involving hardening of the shaped panel (100 A) is performed at room temperature without the application of heat.

9. Method according to Claim 1, in which, after being hardened in said step VII), the panel is heated to about 40°C in order to complete cross-linking of the resin.

10. Method according to Claim 1, in which said step III) involving spreading said mix on said flat forming surface is performed in two or more layers, with the arrangement of a reinforcing layer between the various layers of mix.

11. Method according to Claim 10, in which said reinforcing layer arranged between the various layers of mix is a glass fibre mesh or mat.

12. Method according to Claim 9, in which said reinforcing layer arranged between the various layers of mix is made of metal, for example a steel mesh.

13. Method according to Claim 1, in which a final step involving trimming of the article is performed, after hardening.

## Patentansprüche

1. Verfahren zur Herstellung eines Artikels mit einer nicht flachen Form mit einem Krümmungsradius von ungefähr 15 cm oder mehr, umfassend die folgenden Schritte:
I) Herstellen einer Mischung umfassend granulierte anorganische Materialien und mindestens ein durch Vernetzen aushärtbares Harz, mit einem sehr geringen Schrumpfungsgrad;
II) Herstellen eines flachen formgebenden Trägers, geschützt durch eine Antihaftfolie (250);
III) Verteilen der Mischung über diesen formgebenden Träger;
IV) Ausbreiten einer zweiten Antihaftfolie (200) über die freie Oberfläche der Mischung;
V) Kompaktieren der Mischung durch Vakuum-Vibrationskompression, so dass sie die Konfiguration einer flachen Platte annimmt, die weich, aber ausreichend kompakt ist, so dass sie sich beim folgenden Schritt dieses Verfahrens nicht faltet;
VI) Übertragen dieser Platte, zusammen mit den zwei Folien eines Antihaftmaterials, auf einen starren Träger (300), und Bewirken, dass die Platte die gleiche Form wie die freie Oberfläche (350) des starren Trägers (300) annimmt, wobei diese Oberfläche die gleiche Krümmung aufweist wie der zu erhaltende Artikel (100);
VII) Aushärten der geformten Platte (100A), um die gekrümmte Platte wie gewünscht zu erhalten;
VIII) Entfernen der beiden Folien aus Antihaft-Material von dem Artikel.

2. Verfahren gemäß Anspruch 1, in welchem die granulierten Materialien aus Stein und/oder steinähnlichen und/oder Keramikmaterialien bestehen.

3. Verfahren gemäß Anspruch 2, in welchem diese Steinmaterialien eine Härte gleich oder größer als 7 Mohs aufweisen, und ausgewählt sind aus Quarz, Korund, Aluminiumoxid und Carborund.

4. Verfahren gemäß Anspruch 1, in welchem das mindestens eine durch Vernetzung aushärtbares Harz ein Epoxidharz ist.

5. Verfahren gemäß Anspruch 1, in welchem die freie Oberfläche (350) dieses starren Trägers konkav ist.

6. Verfahren gemäß Anspruch 1, in welchem die freie Oberfläche (350) dieses starren Trägers (300) konvex ist.

7. Verfahren gemäß Anspruch 1, in welchem die freie Oberfläche (350) dieses starren Trägers (300) gewellt ist.

8. Verfahren gemäß Anspruch 1, in welchem dieser Schritt, der das Aushärten der geformten Platte (100 A) beinhaltet, bei Raumtemperatur ohne die Anwendung von Hitze durchgeführt wird.

9. Verfahren gemäß Anspruch 1, in welchem nach dem Aushärten in diesem Schritt VII) die Platte auf ungefähr 40°C erhitzt wird, um das Vernetzen des Harzes fertigzustellen.

10. Verfahren gemäß Anspruch 1, in welchem dieser Schritt III), der das Ausbreiten dieser Mischung auf dieser flachformenden Oberfläche in zwei oder mehr Schichten beinhaltet, mit der Anordnung einer Verstärkungsschicht zwischen den verschiedenen Schichten der Mischung durchgeführt wird.

11. Verfahren gemäß Anspruch 10, in welchem diese zwischen den verschiedenen Schichten der Mischung angeordnete Verstärkungsschicht ein Glasfasergewebe oder Matte ist.

12. Verfahren gemäß Anspruch 9, in welchem diese Verstärkungsschicht, die zwischen den verschiedenen Schichten einer Mischung angeordnet ist, aus Metall gemacht ist, zum Beispiel ein Stahlgewebe.

13. Verfahren gemäß Anspruch 1, in welchem ein finaler Schritt, beinhaltend das Trimmen des Artikels, nach dem Härten durchgeführt wird.

## Revendications

1. Procédé pour produire un article avec une forme non plate qui a un rayon de courbure d'environ 15 cm ou plus, comprenant les étapes suivantes consistant à :
I) préparer un mélange comprenant des matériaux non organiques granulés et au moins une résine pouvant être durcie au moyen de réticulation, avec un très petit degré de rétrécissement ;
II) préparer un support de formation plat, protégé par une feuille antiadhésive (250) ;
III) étaler le mélange sur ledit support de formation ;
IV) étendre une seconde feuille antiadhésive (200) sur la surface libre du mélange ;
V) compacter le mélange au moyen de compression par vibration sous vide de sorte qu'il adopte la configuration d'un panneau plat qui est souple, mais suffisamment compact de sorte qu'il ne peut pas se plier pendant l'étape suivante de ce procédé ;
VI) transférer ledit panneau, conjointement avec les deux feuilles en matériau antiadhésif, sur un support rigide (300) et amener le panneau à adopter la même forme que la surface libre (350) dudit support rigide (300), ladite surface ayant la même courbure que l'article (100) à obtenir ;
VII) faire durcir le panneau formé (100A) afin d'obtenir le panneau incurvé tel que souhaité ;
VIII) retirer les deux feuilles en matériau adhésif de l'article.

2. Procédé selon la revendication 1, dans lequel lesdits matériaux granulés se composent de pierre et/ou de matériaux de type pierre et/ou céramique.

3. Procédé selon la revendication 2, dans lequel lesdits matériaux de type pierre ont une dureté égale ou supérieure à 7 Mohs et sont choisis parmi le quartz, le corindon, l'alumine et le carborundum.

4. Procédé selon la revendication 1, dans lequel ladite au moins une résine pouvant être durcie au moyen de réticulation est une résine époxy.

5. Procédé selon la revendication 1, dans lequel la surface libre (350) dudit support rigide (300) est concave.

6. Procédé selon la revendication 1, dans lequel la surface libre (350) dudit support rigide (300) est convexe.

7. Procédé selon la revendication 1, dans lequel la surface libre (350) dudit support rigide (300) est ondulée.

8. Procédé selon la revendication 1, dans lequel ladite étape impliquant le durcissement du panneau formé (100A) est réalisée à température ambiante sans application de chaleur.

9. Procédé selon la revendication 1, dans lequel, après avoir été durci à ladite étape VII), le panneau est chauffé à environ 40°C afin de terminer la réticulation de la résine.

10. Procédé selon la revendication 1, dans lequel ladite étape III) impliquant l'étalement dudit mélange sur ladite surface de formation plate est réalisée dans deux couches ou plus, avec l'agencement d'une couche de renforcement entre les différentes couches du mélange.

11. Procédé selon la revendication 10, dans lequel ladite couche de renforcement agencée entre les différentes couches de mélange est un filet ou un tapis de fibres de verre.

12. Procédé selon la revendication 9, dans lequel ladite couche de renforcement agencée entre les différentes couches de mélange est réalisée à partir de métal, par exemple une maille en acier.

13. Procédé selon la revendication 1, dans lequel une étape finale impliquant la séparation de l'article est réalisée, après le durcissement.
